(19) Europäisches Patentamt
European Patent Office
Office européen des brevets

(11) EP 1 584 361 A2

(12) EUROPEAN PATENT APPLICATION

(43) Date of publication:
12.10.2005 Bulletin 2005/41

(51) Int Cl.$^7$: A63F 13/10

(21) Application number: 05003418.0

(22) Date of filing: 17.02.2005

(84) Designated Contracting States:
AT BE BG CH CY CZ DE DK EE ES FI FR GB GR HU IE IS IT LI LT LU MC NL PL PT RO SE SI SK TR
Designated Extension States:
AL BA HR LV MK YU

(30) Priority: 18.02.2004 JP 2004040976

(71) Applicant: Kabushiki Kaisha Square Enix (also trading as Square Enix Co., Ltd.)
Tokyo 151-8544 (JP)

(72) Inventors:
- Kobayashi, Masaki
Tokyo 151-8544 (JP)
- Nakazawa, Takatsugu
Tokyo 151-8544 (JP)

(74) Representative: Grünecker, Kinkeldey, Stockmair & Schwanhäusser Anwaltssozietät
Maximilianstrasse 58
80538 München (DE)

(54) **Control of subcharacter's action**

(57) A variety of a sub-character's actions are analyzed so that the sub-character is more likely to act in the friendly characters' favor. A command-execution-value table is provided for sub-characters. The table stores command-execution-values corresponding to multiple characters with respect to each of the commands that can be executed by the sub-character. One of the commands is selected in association with the character to which the selected command is applied. The selection is based upon the command-execution-values corresponding to characters displayed on a display screen. The selected command is applied to the selected character, and a degree of effect of the command execution is obtained. The current command-execution- value is updated to a new command-execution-value calculated based upon the effect degree.

*FIG. 3*

41

| COMMAND (SKILL) / CHARACTER | PHYSICAL ATTACK | FIRE | BLIZZARD | KEARU |
|---|---|---|---|---|
| ENEMY A | 15 | 15 | 10 | 0 |
| ENEMY B | 15 | 5 | 15 | 15 |
| ENEMY C | 10 | 5 | 15 | 5 |
| ENEMY D | 15 | 5 | 10 | 8 |
| ENEMY E | 15 | 8 | 7 | 5 |
| ⋮ | ⋮ | ⋮ | ⋮ | ⋮ |
| FRIEND A | — | 0 | 0 | 15 |
| FRIEND B | — | 0 | 0 | 15 |
| ⋮ | ⋮ | ⋮ | ⋮ | ⋮ |
| SELF J | — | 0 | 0 | 15 |
| ⋮ | ⋮ | ⋮ | ⋮ | ⋮ |

EP 1 584 361 A2

## Description

The present disclosure relates to subject matter contained in Japanese Patent Application No. 2004-040976, filed on February 18, 2004, the disclosure of which is expressly incorporated herein by reference in its entirety.

The present invention relates to a video game apparatus and a method for controlling the video game appratus.

In video games, a genre called a role playing game is known. In role playing games, friendly characters and enemy characters are displayed on a display screen of a display apparatus. A player of the role playing game selects a desired command from various types of commands that the friendly character can use. The commands may be physical attacks like weapon attacks, etc., defense, magic and the like. The command that the enemy character uses is selected automatically in accordance with a video game program.

In most role playing games, one to three friendly character (s) appear. The friendly characters may consist of a main character (player character) and sub-characters. The player may select the command for respective friendly characters, or may select the command for only the main character. When the player selects the command for only the main character, the selection of command for the sub-characters are controlled in accordance with the game program.

However, when the actions of sub-characters are controlled in accordance with the game program, the player is likely to get tired of the video game.

In Japanese Unexamined Patent Publication No.H8-196744, a computer game apparatus having a learning function is disclosed. In the computer game apparatus, the action of a character controlled by a computer is prevented from conforming to a predetermined pattern. In the computer game apparatus, the action of the enemy characters are controlled based upon a status resulting from battles or the player's feature with respect to command selection, etc. However, this technique is not suitable for controlling the action of a sub-character that battles against enemy characters in role playing games.

The present invention is made in view of these problems. It is an object of the present invention to provide a variety of sub-character's actions, and to control the sub-character to more likely act in the friendly characters' favor.

In order to achieve the object, according to a first aspect of the invention, there is provided a method for controlling a video game apparatus. The method includes storing, in a memory, a command-execution-value table of command-execution-values indicating rates of applying commands corresponding to each of multiple characters. Each of the commands is capable of being executed by a sub-character. The command-execution-value table is provided to each of multiple sub-characters.

The method further includes selecting, based upon the command-execution-value corresponding to each of the characters displayed on a display screen, one of the commands in association with a target character to which the selected command is to be applied. The method further includes applying the selected command to the target character to determine a degree of effect.

The method further includes calculating a new command-execution-value for the selected command corresponding to the target character based upon a current command-execution-value of the selected command and the target character and the degree of effect. The method further includes updating the current command-execution-value of the selected command and the target character to the new command-execution-value.

According to a second aspect of the invention, there is provided a video game apparatus. The video apparatus includes a command-execution-value table that stores command-execution-values indicating rates of applying commands corresponding to each of multiple characters. Each of the commands is capable of being executed by a sub-character. The command-execution-value table is provided to each of multiple sub-characters. The video game apparatus further includes a selecting system that selects, based upon the command-execution-value corresponding to each of the characters displayed on a display screen, one of the commands in association with a target character to which the selected command is to be applied. The video game apparatus further includes a first applying system that applies the selected command to the target character to determine a degree of effect.

The video game apparatus further includes a calculator that calculates a new command-execution-value for the selected command corresponding to the target character based upon a current command-execution-value of the selected command and the target and the degree of effect. The apparatus further includes a first updating system that updates the current command-execution-value of the selected command and the target character to the new command-execution-value.

According to a third aspect of the invention, there is provided a computer-readable recording medium on which is recorded a program executed by a video game apparatus. The program causes the video game apparatus to store, in a memory of the video game apparatus, a command-execution-value table of command-execution-values indicating rates of applying commands corresponding to each of multiple characters. Each of the commands is capable of being executed by a sub-character. The command-execution-value table is provided to each of a multiple sub-characters.

The program further causes the apparatus to select, based upon the command-execution-value corresponding to each of the characters displayed on a display screen, one of the commands in association with a target character to which the selected command is to be applied. The program further causes the apparatus to apply the selected command to the target character to determine a degree of effect.

The program further causes the apparatus to calculate a new command-execution-value for the selected command corresponding to the target character based upon a current command-execution-value of the selected command and the target character and the degree of effect. The apparatus further causes the apparatus to update the current command-execution-value of the selected command and the target character to the new command-execution-value.

According to an aspect of the present invention, the sub-character is a member of a group of friendly characters. The sub-character acts together with a main character, which the user controls by selecting a command, and other sub-characters. The action (command and character to be an object of the command execution) of the sub-character is automatically controlled by the video game apparatus (program).

According to an aspect of the present invention the action of the sub-character during a battle is selected based upon the command-execution-value table.

The command-execution-value table is provided for the respective sub-characters. When multiple sub-characters appear in the video game, each of the sub-characters has a command-execution-value table. That is, the command-execution-value table has a one-to-one correspondence with the sub-character.

The commands executed by the sub-character are determined in the video game. The commands may remain the same throughout the battle, or may vary during the game progress. For example, the type of commands may increase according to a level of the sub-character during the game progress.

The command-execution-value table stores command-execution-values indicating rates of command application to each of the characters with respect to the commands executed by the sub-character. One of the commands is selected, based upon the command-execution-values corresponding to the characters displayed on a display screen, in association with the target character, who is an object of the selected command execution.

The command-execution-value indicates a rate of the command execution with respect to combinations of the command and the target character, who is an object of the command execution. The higher the command-execution-value, the higher the probability of the corresponding command execution. On the contrary, the smaller the command-execution-value, the lower the probability of the corresponding command execution.

For example, an integral value is selected from a sum of the command-execution-values corresponding to the characters displayed on the display screen based upon a random number. The command to be executed and the target character is selected based upon the selected integral value. Thus, the command and the character are selected based upon the probability according to the command-execution-value.

Then, the selected command is applied to the selected character.

For example, when the selected command is a command for attacking a target character, the target character is damaged.

A new command-execution-value is calculated based upon a current command-execution-value of the selected command and a degree of the selected command application.

For example, it is assumed that the command for attacking the character is applied to the selected character, and the HP of the selected character decreases. The degree of effect is determined based upon the value of the HP decrease.

As described above, the new command-execution-value is calculated based upon the current command-execution-value and the degree of effect of the selected command execution. Thus, the greater the degree of the effect, the higher the new command-execution-value. On the contrary, the smaller the degree of the effect, the smaller the new command-execution-value. When the current command-execution-value is a maximum value, the new command-execution-value remains the same.

Finally, the current command-execution-value is updated to the new command-execution-value.

According to an aspect of the present invention, when the sub-character applies the selected command to the selected character, the command-execution-value is updated in accordance with the degree of the effect resulting from the command execution. When the degree of effect is high, the command-execution-value is updated to raise the probability of the corresponding command execution. On the contrary, when the degree of effect is small, the command-execution-value is updated to decrease the probability of the command-execution-value. The command-execution-value is updated every time the sub-character executes the command, and the action of the sub-character (the probability of the command and the character to be selected) varies. Furthermore, because the command having the higher command-execution-value is likely to be selected, the sub-character is automatically controlled to act effectively in the friendly characters' favor.

In one embodiment, the command-execution-values may include a non-selectable value, which can not be selected when selecting the command and the character. When the command-execution-value includes the non-selectable value, the command having the non-selectable value is preliminarily applied to a corresponding character.

Then, it is determined whether the command having the non-selectable value will cause advantageous effects to the sub-characters and friendly characters based upon a result obtained by preliminarily applying the command having the non-selectable value. When it is determined that the command having the non-selectable value will cause an advantageous effect, the non-selectable value is updated to a selectable value, which can be selected when selecting the command and the character.

For example, when the command for attacking a character is applied to the friendly character, it is generally regarded as self-destruction. Thus, the command-execution-value for a combination of such an offensive command and the friendly character is initially set to a non- selectable value, for example, zero. However, when the friendly character is in the state of absorbing the attack by the offensive command and thereby increasing the HP, execution of the offensive command is deemed to be advantageous for the friendly character. As in this example, when the command having the non-selectable command-execution-value is preliminarily applied to the corresponding character, and when the preliminary application results in an advantage for the friendly characters, the non-selectable value is updated to a selectable value. Thus, the probability of such a combination of the command and the character is generated.

In another embodiment, character status data indicating a status of the character with respect to the characters is stored in the memory. When the selected command changes the character status and when the character status data of the target character indicates that the character is already in the state which is to be changed by the selected command, the selected command is omitted from the commands to be selected.

For example, it is useless to apply a command for paralyzing a character (making the character unable to move for a predetermined period of time) to a character, which is already in a state of "PARALYSIS" (not being able to move for a predetermined period of time) . As in this case, when the selected command is a command affecting the character status, and when the character status data of the selected character stored in the memory indicates that the character is already in the state, which is to be changed by the selected command, the selected command is omitted from the candidates. Thus, useless command execution is avoided.

According to the present invention, the recording medium may be an optical disk, a magnetic optical disk, a magnetic disk, a semiconductor memory, etc.

Fig. 1 is a block diagram showing a structure of a video game apparatus according to an embodiment of the invention;

Fig. 2 is a view showing an example of a display screen of a video game according to an embodiment of the invention;

Fig. 3 is a view showing an example of a command-execution-value table according to an embodiment of the invention;

Fig. 4 is a flowchart showing a processing procedure of a video game apparatus during a battle by a sub-character according to an embodiment of the invention;

Fig. 5 is a flowchart showing a processing procedure of a video game apparatus during a battle by a sub-character according to an embodiment of the invention;

Fig. 6 is a view showing an example of a command execution record stored in a work area according to an embodiment of the invention;

Fig. 7 is a view showing an example of a command execution record when a command execution value is switched 0 to 1 according to an embodiment of the invention;

Fig. 8 is a view showing an example of a command execution record when an integral value is allocated for respective combination of a command and a character according to an embodiment of the invention;

Fig. 9 is a view showing an example of a command-execution-value table according to another embodiment of the invention; and

Fig. 10 is a flowchart showing a processing procedure of a video game apparatus during a battle by a sub-character according to another embodiment of the invention.

Preferred embodiments of the invention will be explained in detail with reference to the appended drawings.

Fig. 1 is a block diagram showing a structure of a video game apparatus 1 according to a first embodiment of the invention. The video game apparatus 1 includes a controller 2 having a central processing unit (CPU), a read only memory (ROM) and the like. The controller 2 controls the overall operation of the video game apparatus 1. A program executed by the controller 2 is recorded on a DVD/CD-ROM 13, etc. The DVD/CD-ROM 13 also stores data of images or text displayed on a display screen of a display apparatus 12. The DVD/CD-ROM 13 storing the program and the data is loaded into a DVD/CD-ROM drive 7. The program and the data read by the DVD/CD-ROM drive 7 are transferred to a hard disk 3 or a random access memory (RAM) 4. The controller 2 executes the program or the data loaded onto the hard disk 3 or the RAM 4 to advance a video game.

A graphics processor 6, a sound processor 5, a communications interface 8, and an interface section 9 are also connected to the controller 2 via a system bus like a data bus, an address bus, etc. The graphics processor 6 stores or processes image data to generate and output a video signal. The sound processor 5 stores or processes sound data to generate and output a sound signal. The communications interface 8 connects to a network 14. The interface section 9 is connected to an input section 10 such as a controller and the like. The input section 10 receives user's operations to buttons or a cross key. The interface section 9 is also connected to a memory card 11 for storing various types of data.

The images (moving images or static images) or text processed by the graphics processor 6 are displayed on a display apparatus 12 connected to the video game apparatus 1 based upon the program or the data loaded onto the hard disk 3 or the RAM 4. The displayed images or text may include images of characters consisting of friendly characters and enemy characters and background images. Current hit points (HP) of the friendly characters, magic points (MP) indicating a remaining value of magic points that the friendly characters can use, an explanation of a battle status and the like are also displayed on the display apparatus 12.

The images and text displayed on a display screen of the display apparatus 12 are determined under specific rules based upon algorithms or program design. The images or text displayed on the display screen vary in accordance with various types of parameters, an on/off status of flags, etc.

Fig. 2 shows an example of a screen of a video game (role playing game) displayed on the display apparatus 12. In this exemplary screen shown in Fig. 2, a group of friendly characters aaa, bbb and ccc battle against a group of enemy characters AAA, BBB and CCC.

Each of the friendly characters is provided with HPs. The HPs for respective friendly characters are displayed on the display screen in association with the names of the friendly characters. The HP decreases when the enemy character attacks the friendly character.

Some of the friendly characters are able to execute magic. With respect to the friendly characters that are able to execute magic, the current MPs are displayed on the display screen in association with the names of the friendly characters. When the friendly character executes magic, the predetermined value of magic points necessary for executing the magic are subtracted from the current MP. Then, the displayed MP is updated to the subtracted value.

The enemy characters also have HPs and MPs. Some of enemy characters do not have MPs, and can not execute magic. The HPs and MPs of the enemy characters are not displayed on the display screen.

The friendly characters and the enemy characters attack each other. Generally, the friendly character is operated to defeat the enemy character, that is, to zero the HP of the enemy character. On the contrary, the enemy character is controlled to zero the HP of the friendly character. When the HP of the enemy character becomes zero by the friendly character's attack, the group of friendly characters win the battle. When the HP of the friendly character becomes zero by the enemy character's attack, the friendly character whose HP becomes zero can not fight the battle any more. The friendly character may be restored to the battle when recovery magic and the like is applied.

The group of friendly characters consists of a main character (player character) and sub-characters.

The main character is the friendly character that acts in accordance with a command selected by an operator of the video game apparatus with the input section 10. The command is selected from multiple commands such as a physical attack (attack with weapon, for example), defense, or magic, etc. The operator of the video game apparatus also selects the character to be an object of the selected command from the enemy characters and the friendly characters with the input section 10.

The sub-character is the friendly character that acts in accordance with a command selected automatically based upon the game program. The sub-character to be an object of the automatically selected command is also automatically selected by the video game apparatus based upon the game program.

The selection of the command and the object of the selected command is also executed automatically for the enemy characters.

In this embodiment, the sub-character is a character that was originally the enemy character and became a member of the friendly character in the course of the game progress. Such a sub-character can participate in the battle against the enemy characters with other friendly characters.

In the exemplary display screen of Fig. 2, the friendly characters aaa and ccc serve as the sub-characters, and the friendly character bbb serves as the main character. The operator of the video game apparatus may select all three of the friendly characters as the main characters, or may switch any one of the sub-characters aaa and ccc to the main character by using input section.

In this embodiment, the automatically selected command that the sub-character executes varies widely and is effective in view of the game progress. The detail will be explained hereinafter.

Fig. 3 shows an example of a command-execution-value table 41.

The command-execution-value table 41 is provided for respective sub-characters, and is stored in the RAM 4. The command-execution-value table 41 may be prepared in advance for respective potential sub-characters. Otherwise, the command-execution-value table 41 may be generated when the sub-character is generated, that is, the enemy character is switched to the friendly character in the course of the game progress. In both cases, the command-execution-value table 41 corresponding to each of the sub-characters is stored in the RAM 4.

The command-execution-value table 41 contains command-execution-value records corresponding to respective characters appearing in the video game. The command-execution-value records are represented by data in rows of the command-execution-value table 41. The command-execution-value record stores command-execution values (integral value from 0 to 15) or a flag indicating an inability to execute the command, which flag is represented by a horizontal line for respective combinations of the characters and the commands that the sub-character can execute.

The commands that the sub-characters can execute are determined in advance for respective sub-characters based upon a game rule (algorithm or programming), and the executable commands vary in accordance with a game level, accessories and the like.

The detail will be explained. It is assumed that the command-execution-value table 41 of Fig. 3 is prepared for the sub-character J. The sub-character J can execute four commands including a physical attack (hit with a sword, etc.), FIRE (an offensive magic), BLIZZARD (an offensive magic), and KEARU (a cure magic).

The command-execution-value record for the enemy character A will now be explained. The command-execution-values of the four commands of the physical attack, FIRE, BLIZZARD and KEARU that the sub-character J can apply to the enemy character A are, 15, 15, 10, and 0, respectively.

The command-execution-value record for the friendly character A will now be explained. The sub-character J can apply three commands of FIRE, BLIZZARD and KEARU to the friendly character A, and the command-execution-values for these commands are 0, 0, and 15, respectively. The flag indicating the inability to execute the command of physical attack is active. This means that the sub-character J can not apply the physical attack to the friendly character A.

The command-execution-value indicates a rate of the command execution. In the example of Fig. 3, the command-execution-values are used to determine which command among the physical attack, FIRE, BLIZZARD and KEARU is to be executed. The character to be an object of the determined command is also determined based upon the command-execution-values. Although the detail will be explained later, the higher the command-execution-value, the higher the rate of the corresponding command execution. Furthermore, the command-execution-value in the command-execution-value table 41 is updated in accordance with an effect resulting from the execution of the corresponding command. The detail of the update will be explained later.

An initial value of the command-execution-value of the command that brings about advantageous effects to the friendly characters may be set to 15. The initial value of the command-execution-value of the command that brings about disadvantageous effects to the friendly characters may be set to 0.

Figs. 4 and 5 are flowcharts showing a processing procedure of a video game apparatus from the beginning to the end of a battle by the sub-character.

Basically, the friendly characters act together in a group of three. When the group of the friendly characters encounters the enemy characters (step 51: YES), the battle starts (step 52).

In the battle, the friendly characters and the enemy characters alternately execute commands affecting one another. When the group of the friendly characters includes the sub-character and when the sub-character has a turn for executing the command, the command-execution-records corresponding to the characters joining in the battle are read from the command-execution-value table 41 to be stored in a work area (step 53) .

For example, it is assumed that the command-execution-value table 41 shown in Fig. 3 is provided for the sub-character J. When the enemy characters A, B and C and the friendly characters A and B join in the battle, the command-execution-value records of the enemy characters A, B and C and the friendly characters A and B are stored in the work area as shown in Fig. 6. The command-execution-value record of the sub-character J itself is also stored in the work area as shown in Fig. 6.

Then, it is determined whether any command-execution-value records stored in the work area contain a command-execution-value of zero (step 54).

When one of the command-execution-value records in the work area contain a command-execution-value of zero (step 54: YES), the processing of steps 55-59 is executed.

At step 55, the command having the command-execution value of zero is preliminarily applied to the corresponding character. In Fig. 6, the command-execution-value of KEARU in the command-execution-value record corresponding to the enemy character A is zero. Thus, the KEARU command is preliminarily applied to the enemy character A by way of experiment. Here, KEARU is a command that restores the HP of the character to which KEARU is applied.

At step 56, an effect value that the experimentally executed command causes is calculated. The effect value of the command is represented, for example, by the value of damage amounts or the value of MP increase or decrease. When the KEARU is executed by way of experiment, the HP of the character, to which KEARU is applied, changes.

At step 57, it is determined whether the effect value of the experimentally executed command is advantageous to the friendly characters. For example, with respect to general characters, the HP increases when the command KEARU is applied. The increase of the HP of the enemy characters brings about disadvantages to the friendly characters. Thus, when the effect value is determined to be disadvantageous to the friendly characters (step 57: NO), the processing proceeds to step 59, and the processing of steps 55-57 is repeated with respect to other commands of which command-execution-values are zero (step 59: NO).

Some enemy characters have the HPs in the minus range. When KEARU is applied to such an enemy character, the value of the HP gets closer to zero. Thus, KEARU brings about an advantageous effect to the friendly characters when it is applied to such enemy character. When the effect value of the experimentally executed command is determined to be advantageous to the friendly characters as in the above case (step 57: YES), the command-execution-value of the corresponding command is updated from zero to one (step 58).

Another example will be explained. The command of FIRE damages the character to which it is applied. When the sub-character applies FIRE to a friendly character, the value of the HP of the friendly character decreases. However, there is a case where a rule (algorithm) that the friendly character wearing an accessory absorbing an attack of fire is not damaged by the FIRE is applied. Under the rule, the HP of such a friendly character increases when FIRE is applied. In this case, the effect value of the FIRE by the sub-character is advantageous to the friendly characters (step 57: YES), the command-execution-value corresponding to the friend character is updated from zero to one (step 58).

Fig. 7 shows an example of the command-execution-value records in which some of the command-execution-values are updated from zero to one. Specifically, the command-execution-value of KEARU for the enemy character A and the command-execution-value of FIRE for the friendly character A are respectively updated from zero to one.

The command-execution-value indicates a rate of the command selection, and when the command-execution-value is updated from zero to one, the corresponding command serves as a candidate for command selection.

when the above processing steps are executed for all of the commands having the command-execution-value of zero in the command-execution-value records stored in the work area (step 59: YES), the processing proceeds to step 60 of Fig. 5.

At step 60, a combination of the command to be executed and the character to be an object of the command is determined in accordance with the probability calculated based upon the command-execution-values in the command-execution value records.

The determination processing will be explained in detail. Here, it is assumed that the command-execution-value records shown in Fig. 7 are stored in the work area. In this case, a sum of the command-execution-values is 171.

The integral values ranging from 0 to 171 are allocated for respective command-execution-values in accordance with the sizes of the respective command-execution-values as shown in Fig. 8. In Fig. 8, the allocated integral values are shown below the respective command-execution-value.

Then, one integral value is obtained from the integral values ranging from 0 to 171 by a random number generation.

The combination of the command and the character to which the obtained integral value is allocated is determined to be an object of the command execution.

Referring to Fig. 8, when the integral value 72 is obtained by random numbers, the combination of "BLIZZARD" and the enemy character B corresponds to the value. Thus, BLIZZARD is determined as the command to be executed, and the enemy character is determined to be an object of the command execution.

As described above, the combination of the command and the object of the command execution is determined in accordance with the probability based upon the command-execution-value.

Then, it is determined whether the determined command can be executed.

If the determined command is a magic command and the sub-character does not have the MP necessary for executing the magic command (the current MP of the sub-character is less than the MP necessary for the magic command execution), the sub-character can not execute the determined magic command. When the determined command can not be executed as in the above case (step 61: NO), the determined command is omitted from the objects of the command selection (step 62) . Then, the combination of the command to be executed and the target character is selected from the commands and characters other than the command and the character omitted in the step 62 (step 60) .

When the determined object can be executed (step 61: YES), the determined command is applied to the corresponding character (step 63).

Then, at step 64, the effect value which the determined command execution brings about to the target character is obtained.

Next, at step 65, a new command-execution-value is determined with respect to the determined combination of the command and the character based upon the current command-execution-value and the effect value of the corresponding command by the following formula.

$$\text{New command-execution-value} = (x+y)/2$$

In the formula, x indicates the current command-execution-value of the executed command, and y indicates an effect degree of the command execution. Here, the effect degree y is an integral value selected from 0 to 15 obtained by converting the degree of the effect based upon the increased or decreased value of the HP or MP.

The effect degree y is determined by the following formula:

$$(\text{decreased HP value} \times 10/\text{maximum HP}) + (\text{decreased MP value} \times 5/\text{maximum MP})$$

For example, it is assumed that the maximum HP value is 200 and the maximum MP value is 100, and the HP and MP are decreased to zero by the command execution. Here, the effect degree y is:

$$\{(200 \text{ x } 10)/200\} + \{(100 \text{ x } 5)/100\} = 15$$

When it is assumed that the maximum HP value is 200 and the maximum MP value is 100, and neither HP nor MP is decreased by the command execution, the effect degree y is:

$$\{(0 \text{ x } 10)/200\} + \{(0 \text{ x } 5)/100\} = 0$$

Thus, the maximum effect is scaled to 15, while the minimum effect is scaled to 0.

The detail of calculating the new command-execution-value will be explained. It is assumed that BLIZZARD is applied to the enemy character B, and the effect degree of 15 (maximum effect) is obtained. Referring to Fig. 7, the current command- execution value is 15. Therefore, the command-execution-value is:

$$(15+15)/2=15$$

Thus, the command-execution-value of BLIZZARD for the enemy character B remains 15. When the effect degree of 0 (minimum effect) is obtained, that is, when no effect is brought about or BLIZZARD does not hit the enemy character B, the new command is:

$$(15+0)/2=7 \text{ (rounding to whole number)}$$

Thus, the command-execution-value of BLIZZARD for the enemy character B is updated from 15 to 7 (step 66).

The smaller the command-execution-value for a certain character becomes, the lower the probability of the command execution for the corresponding character becomes. In the above case, the probability of the command execution of BLIZZARD for the enemy character B is 15/171 (about 8.9%) before the command-execution-value is updated. After the command-execution-value is updated, the probability becomes 7/163 (about 4.3%).

While the probability of the command execution of BLIZZARD for the enemy character B gets lower, the probabilities of the command execution of the other commands for the other enemy characters as well as the probabilities of the command execution of commands other than BLIZZARD for the enemy character B get higher. For example, the probability of the command execution of FIRE for the enemy character B is 15/171 (about 8.9%) before the command-execution-value of BLIZZARD for the enemy character B is updated. When the command-execution-value of BLIZZARD is updated, the probability of the command execution of FIRE for the enemy character B is 15/163 (9.3%).

On the other hand, there is a case where a certain command is applied to a certain character and the high effect degree is obtained. Thus, the command-execution-value of the certain command for the certain character is updated to a higher value. In this case, the probability of the command-execution of the certain command for the certain character rises. As a result, the probabilities of the command execution of the other commands for the other characters relatively decline. The probabilities of the command execution of commands other than the certain command for the certain character also relatively decline.

When the battle ends (step 67: YES), the command-execution-value table 41 is updated based upon the command-execution-records stored in the work area (step 68). When the battle continues and when the sub-character has another turn executing the command (step 67: NO), the processing returns to step 54.

As described so far, the command to be executed and the character to be an object of the command execution are determined based upon the probability of the command execution calculated from the command-execution-values stored in the command-execution-value table 41. When the determined command is applied to the determined character, the effect degree of the command execution is obtained. When the low effect degree is obtained, the command-execution-value (probability) of the determined command for the determined character is updated to a lower value. Thus, the probabilities of the command execution of the other commands for the other characters relatively rise. The probabilities of the command execution of the commands other than the determined command for the determined character also rise. On the contrary, when the high effect degree is obtained, the command-execution-value (probability) of the determined command for the determined character is updated to a higher value. Thus, the probabilities of the command execution of the other commands for the other characters relatively decline. The probabilities of the command execution of the commands other than the determined command for the determined character also decline. In this case, the relative change of the probability of the command execution is not brought about with respect the other commands and characters.

By updating the command-execution-values and the command-execution-value table 41 every time the battle by the sub-character is performed, the effective determination of the command to be executed and the character to be an object of the command execution is achieved. Thus, the action of the sub-character becomes more effective. In addition, because the command-execution-value records and the command-execution-value table 41 are updated every time the sub-character executes the command, the command-execution-value is updated in accordance with a status of the character, for example, even when the effect of the command for a certain character is changed because of a level change of the certain character.

In the above embodiment, the command to be executed and the target character are first determined (step 60), and then, it is determined whether the determined combination is executable (step 61) . If it is determined that the determined combination is not executable, the determined combination of the command and the character are omitted from the candidates of the command execution (step 62). However, the non-executable command may be omitted from the candidates in advance, and then the command and the target character may be determined (step 60).

Fig. 9 is a view showing a command-execution-value table 71 according to a second embodiment. The command-execution-value table 71 is different from the command-execution-table 41 in that it contains flags indicating states of the respective characters. Fig. 10 is a flowchart showing a processing procedure of the video game apparatus from the beginning to the end of a battle by the sub-character according to the second embodiment, and corresponds to Fig. 5 of the first embodiment. Fig. 10 is different from Fig. 5 in that it includes a judgement step of step 69. The same reference numbers indicate the same processing, and overlapping explanations will not be provided.

In the second embodiment, a concept of character status is incorporated. The character status indicates the current status of the character. The character status may include "PARALYSIS", "POISON", "HASTE", etc. When the character is in the state of PARALYSIS, the character is not able to execute a command for a predetermined period of time or for a predetermined number of turns for attacks. When the character is in the state of POISON, the HP of the character decreases by predetermined points at predetermined time intervals. When the character is in the state of HASTE, the character's movement is quick.

Furthermore, in this embodiment, the sub-character can execute a magic command, which changes the status of the character to which the magic command is applied. The sub-character with which the command-execution-value table 71 is provided can execute five commands including the physical attack, FIRE, BLIZZARD, KEARU and PARALYSIS. When the command PALALYSIS is applied to a certain character, the status of the character is switched to PARALYSIS. In addition, the command-execution-value table 71 indicates that the enemy character B has the character status of PARALYSIS.

When the determined command can be executed for the determined character (step 61), and when the determined command is a magic command for changing the character status, it is determined whether the flag of the character status to be an object of the status change is active with respect to the determined character (step 69).

For example, it is assumed that the determined command is PARALYSIS and the enemy character B is determined to be a target object of the command execution. Because the status flag of PARALYSIS is already active with respect to the enemy character B in the command-execution-value table 71 (step 69: YES), the command PARALYSIS is omitted from the candidates of the command execution (step 62). Then, the determination processing is performed with respect to the other commands and characters. Thus, a useless command execution, such as applying the command PARALYSIS to the character that is in the state of PARALYSIS, can be avoided, and an effective sub-character's action is achieved.

The embodiments described so far are premised on the rule (algorithm) that a single command is applied to a single character. However, the above-described determination processing of the combination of the command and the character may be implemented in a video game or a role playing game having a rule (algorithm) that a single command is applied simultaneously to multiple friendly and enemy characters. In such a video game, the determined command is preliminarily applied to the multiple characters before its execution. Then, it is determined whether the execution of the command will cause disadvantageous effects to the friendly character. When it is determined that a disadvantageous effect will occur, for example, when the command will decrease the HPs of two of three enemy characters and will raise the HP of one of three enemy characters, the command is omitted from the candidates for command execution.

Although the invention has been described with reference to several exemplary embodiments, it is understood that the words that have been used are words of description and illustration, rather than words of limitation. Changes may be made within the purview of the appended claims, as presently stated and as amended, without departing from the scope and spirit of the invention in its aspects: Although the invention has been described with reference to particular means, materials and embodiments, the invention is not intended to be limited to the particulars disclosed; rather, the invention extends to all functionally equivalent structures, methods, and uses such as are within the scope of the appended claims.

## Claims

1. A method for controlling a video game apparatus, comprising:

    storing, in a memory, a command-execution-value table of command-execution-values indicating rates of applying commands corresponding to each of a plurality of characters, each of the commands capable of being executed by a sub-character, the command-execution-value table being provided for each of a plurality of sub-characters,
    selecting, based upon the command-execution-value corresponding to each of the characters displayed on a display screen, one of the commands in association with a target character to which the selected command is to be applied;
    applying the selected command to the target character to determine a degree of effect;
    calculating a new command-execution-value for the selected command corresponding to the target character based upon a current command-execution-value of the selected command and the target character and the degree of effect; and
    updating the current command-execution-value of the selected command and the target character to the new command-execution-value.

2. The method for controlling the video game according to claim 1, wherein the command and the target character are selected using a probability based upon the command-execution-value.

3. The method for controlling the video game according to claim 1, wherein the command and the target character are selected based upon a random number selected from a sum of the command-execution-values corresponding to the displayed characters.

4. The method for controlling the video game according to claim 1, wherein when the command-execution-value includes a non-selectable value, which can not be selected when selecting the command and the target character, the method further comprises:

    preliminarily applying the command having the non-selectable value to a corresponding character;
    determining whether the command having the non-selectable value will cause advantageous effects to the sub-characters and friendly characters based upon a result obtained by preliminarily applying the command having the non-selectable value; and
    updating the non-selectable value to a selectable value, which can be selected when selecting the command and the target character, when it is determined that the command having the non-selectable value will cause the advantageous effect.

5. The method for controlling the video game according to claim 1, further comprising:

    storing, in the memory, character status data indicating a status of each character;
    when the selected command is a command for changing the character status and when the character status data of the target character indicates that the target character is already in the state to be changed by the selected command, omitting the selected command from the commands to be selected.

6. A video game apparatus comprising:

    a command-execution-value table that stores command-execution-values indicating rates of applying commands corresponding to each of a plurality of characters, each of the commands capable of being executed by a sub-character, the command-execution-value table being provided for each of a plurality of sub-characters,
a selecting system that selects, based upon the command- execution -value corresponding to each of the characters displayed on a display screen, one of the commands in association with a target character to which the selected command is to be applied;
a first applying system that applies the selected command to the target character to determine a degree of effect;
a calculator that calculates a new command-execution-value for the selected command corresponding to the target character based upon a current command-execution-value of the selected command and the target character and the degree of effect; and
a first updating system that updates the current command-execution-value of the selected command and the target character to the new command-execution-value.

**7.** The video game apparatus according to claim 6, wherein the selecting system selects the command and the target character using a probability based upon the command-execution-value.

**8.** The video game apparatus according to claim 6, wherein the selecting system selects the command and the target character based upon a random number selected from a sum of the command-execution-values corresponding to the displayed characters.

**9.** The video game apparatus according to claim 6, wherein when the command-execution-values includes a non-selectable value, which can not be selected by the selecting system, the apparatus further comprises:

a second applying system that preliminarily applies the command having the non-selectable value to a corresponding character;
a determining system that determines whether the command having the non-selectable value will cause advantageous effects to the sub-characters and friendly characters based upon a result obtained by the second applying system; and
a second updating system that updates the non-selectable value to a selectable value, which can be selected by the selecting system, when the determining system determines that the command having the non-selectable value will cause the advantageous effect.

**10.** The video game apparatus according to claim 6, further comprising:

a memory that stores character status data indicating a status of each character;
an omitting system that omits the selected command from the commands to be selected, when the selecting system selects a command for changing the character status and when the character status data of the target character indicates that the character is already in the state to be changed by the selected command.

**11.** A computer-readable recording medium on which is recorded a program executed by a video game apparatus, the program causing the video game apparatus to execute:

storing, in a memory of the video game apparatus, a command-execution-value table of command-execution-values indicating rates of applying commands corresponding to each of a plurality of characters, each of the commands capable of being executed by a sub-character, the command-execution-value table being provided for each of a plurality of sub-characters;
selecting, based upon the command-execution-value corresponding to each of the characters displayed on a display screen, one of the commands in association with a target character to which the selected command is to be applied;
applying the selected command to the target character to determine a degree of effect;
calculating a new command-execution-value for the selected command corresponding to the target character based upon a current command-execution-value of the selected command and the target character and the degree of effect; and
updating the current command-execution-value of the selected command and the target character to the new command-execution-value.

**12.** The recording medium according to claim 11, wherein the command and the target character are selected using a probability based upon the command-execution-value.

**13.** The recording medium according to claim 11, wherein the command and the target character are selected based upon a random number selected from a sum of the command-execution-values corresponding to the displayed characters.

**14.** The recording medium according to claim 11, wherein when the command-execution-value includes a non-selectable value, which can not be selected when selecting the command and the character, the program further causes the video game apparatus to execute:

preliminarily applying the command having the non-selectable value to a corresponding character;
determining whether the command having the non-selectable value will cause advantageous effects to the sub-characters and friendly characters based upon a result obtained by preliminarily applying the command having the non-selectable value; and
updating the non-selectable value to a selectable value, which can be selected when selecting the command and the character, when it is determined that the command having the non-selectable value will cause the advantageous effect.

**15.** The recording medium according to claim 11, wherein the program further causes the video game apparatus to execute:

storing, in the memory, character status data indicating a status of each character;
when the selected command is a command for changing the character status and when the character status data of the target character indicates that the character is already in the state to be changed by the selected command, omitting the selected command from the commands to be selected.

FIG. 1

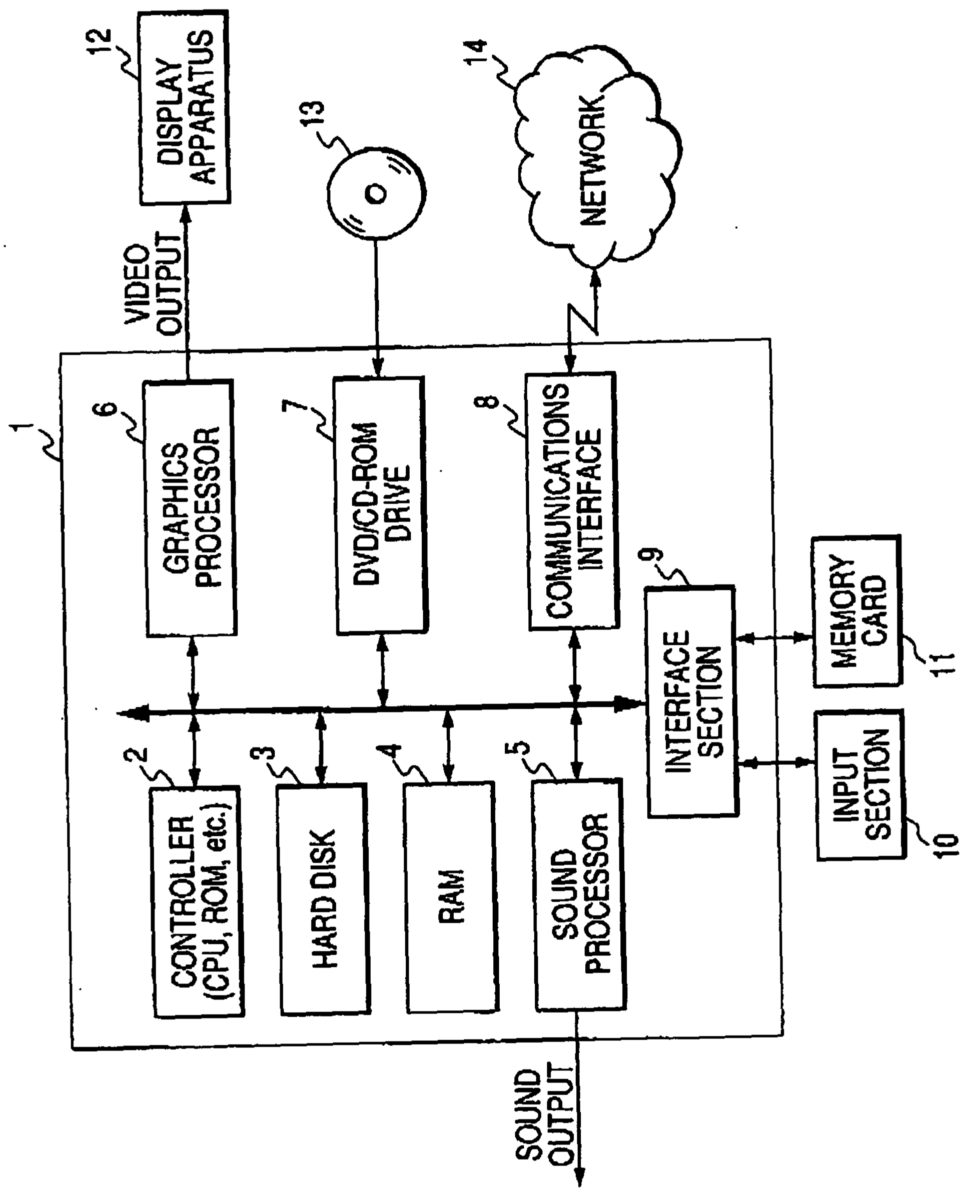

1
2
CONTROLLER (CPU, ROM, etc.)
3
HARD DISK
4
RAM
5
SOUND PROCESSOR
6
GRAPHICS PROCESSOR
7
DVD/CD-ROM DRIVE
8
COMMUNICATIONS INTERFACE
9
INTERFACE SECTION
10
INPUT SECTION
11
MEMORY CARD
12
DISPLAY APPARATUS
13
14
NETWORK
VIDEO OUTPUT
SOUND OUTPUT

FIG. 2

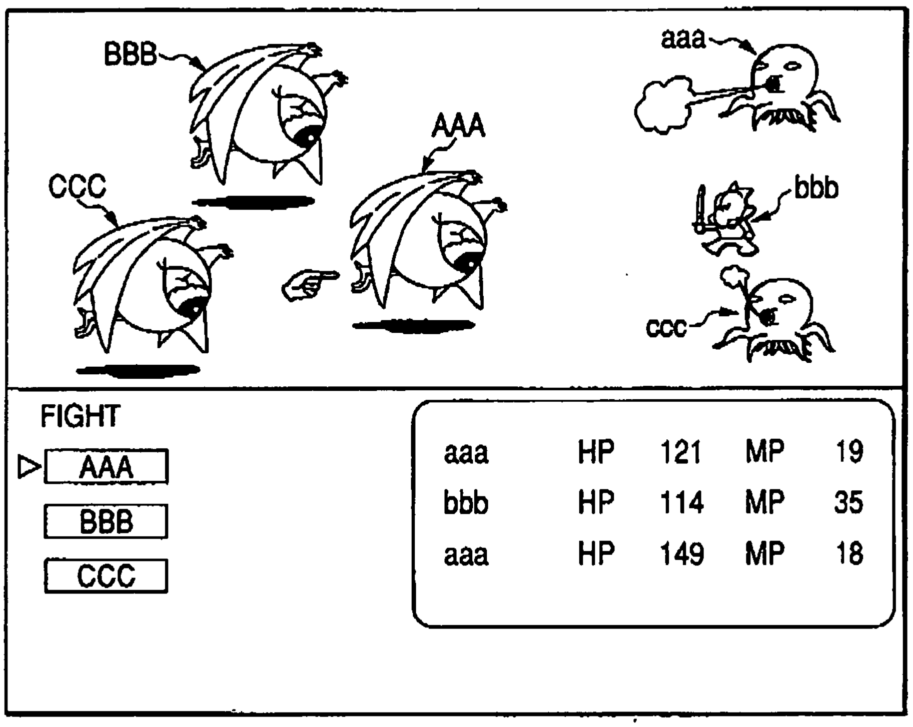
BBB
AAA
CCC
aaa
bbb
ccc
FIGHT
AAA
BBB
CCC
aaa HP 121 MP 19
bbb HP 114 MP 35
aaa HP 149 MP 18

*FIG. 3*

41

| COMMAND (SKILL) / CHARACTER | PHYSICAL ATTACK | FIRE | BLIZZARD | KEARU |
|---|---|---|---|---|
| ENEMY A | 15 | 15 | 10 | 0 |
| ENEMY B | 15 | 5 | 15 | 15 |
| ENEMY C | 10 | 5 | 15 | 5 |
| ENEMY D | 15 | 5 | 10 | 8 |
| ENEMY E | 15 | 8 | 7 | 5 |
| ⋮ | ⋮ | ⋮ | ⋮ | ⋮ |
| FRIEND A | — | 0 | 0 | 15 |
| FRIEND B | — | 0 | 0 | 15 |
| ⋮ | ⋮ | ⋮ | ⋮ | ⋮ |
| SELF J | — | 0 | 0 | 15 |
| ⋮ | ⋮ | ⋮ | ⋮ | ⋮ |

FIG. 4

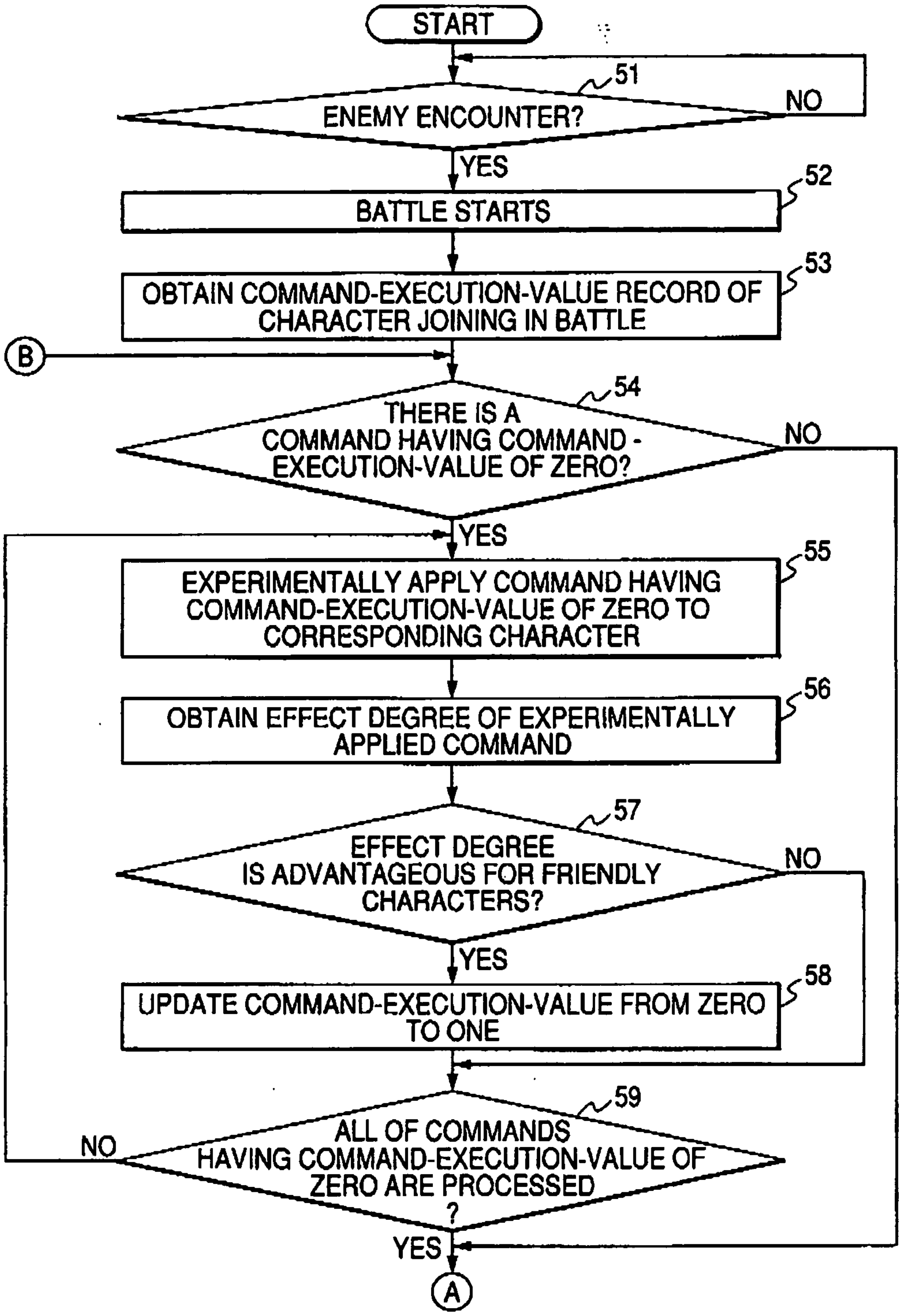
START
ENEMY ENCOUNTER?
51
NO
YES
BATTLE STARTS
52
OBTAIN COMMAND-EXECUTION-VALUE RECORD OF CHARACTER JOINING IN BATTLE
53
B
THERE IS A COMMAND HAVING COMMAND - EXECUTION-VALUE OF ZERO?
54
NO
YES
EXPERIMENTALLY APPLY COMMAND HAVING COMMAND-EXECUTION-VALUE OF ZERO TO CORRESPONDING CHARACTER
55
OBTAIN EFFECT DEGREE OF EXPERIMENTALLY APPLIED COMMAND
56
EFFECT DEGREE IS ADVANTAGEOUS FOR FRIENDLY CHARACTERS?
57
NO
YES
UPDATE COMMAND-EXECUTION-VALUE FROM ZERO TO ONE
58
ALL OF COMMANDS HAVING COMMAND-EXECUTION-VALUE OF ZERO ARE PROCESSED ?
59
NO
YES
A

FIG. 5

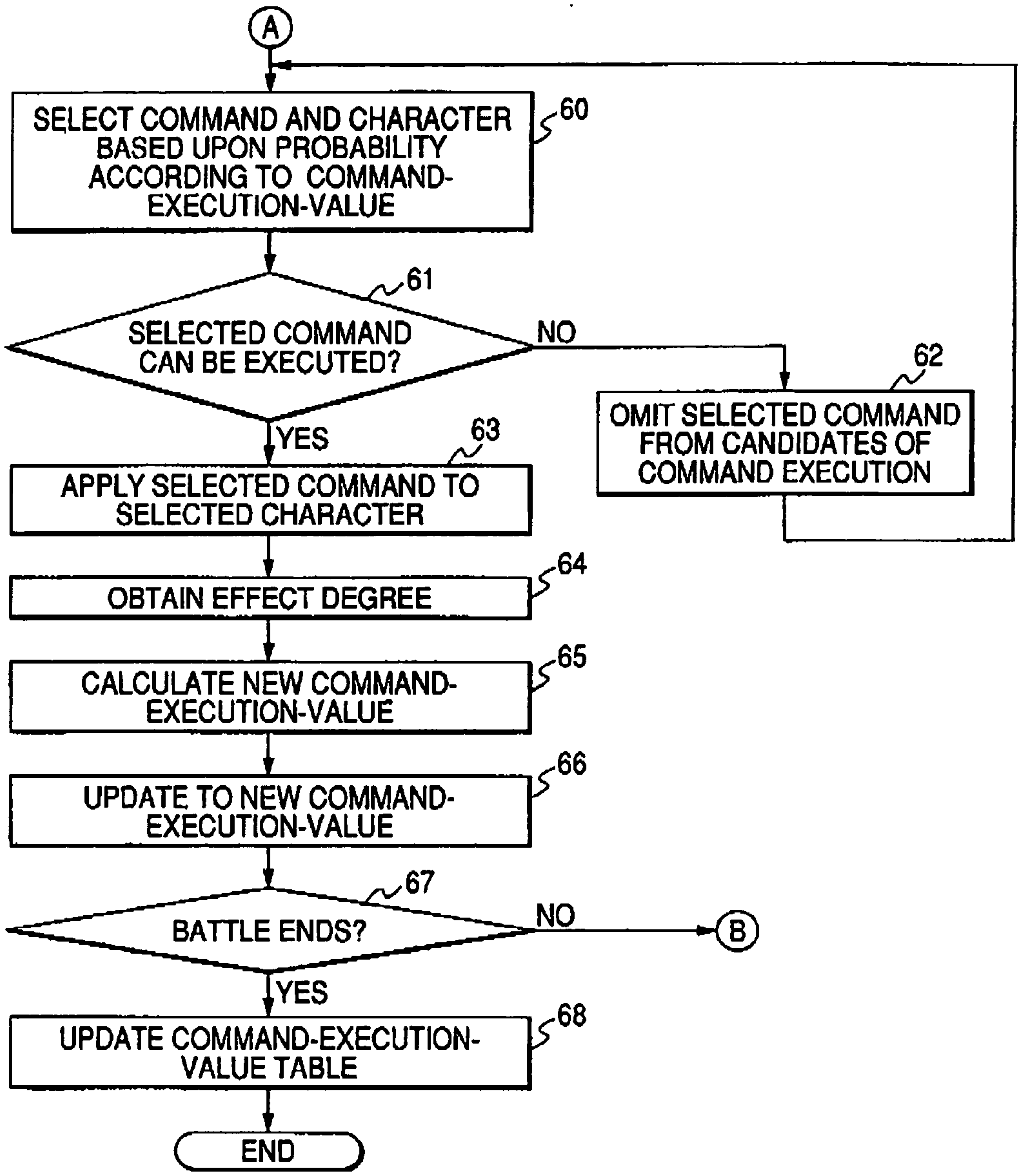
A
SELECT COMMAND AND CHARACTER BASED UPON PROBABILITY ACCORDING TO COMMAND-EXECUTION-VALUE
60
SELECTED COMMAND CAN BE EXECUTED?
61
NO
YES
OMIT SELECTED COMMAND FROM CANDIDATES OF COMMAND EXECUTION
62
APPLY SELECTED COMMAND TO SELECTED CHARACTER
63
OBTAIN EFFECT DEGREE
64
CALCULATE NEW COMMAND-EXECUTION-VALUE
65
UPDATE TO NEW COMMAND-EXECUTION-VALUE
66
BATTLE ENDS?
67
NO
B
YES
UPDATE COMMAND-EXECUTION-VALUE TABLE
68
END

FIG. 6

| COMMAND (SKILL) / CHARACTER | PHYSICAL ATTACK | FIRE | BLIZZARD | KEARU |
|---|---|---|---|---|
| ENEMY A | 15 | 15 | 10 | 0 |
| ENEMY B | 15 | 5 | 15 | 15 |
| ENEMY C | 10 | 5 | 15 | 5 |
| FRIEND A | — | 0 | 0 | 15 |
| FRIEND B | — | 0 | 0 | 15 |
| SELF J | — | 0 | 0 | 15 |

FIG. 7

| COMMAND (SKILL) / CHARACTER | PHYSICAL ATTACK | FIRE | BLIZZARD | KEARU |
|---|---|---|---|---|
| ENEMY A | 15 | 15 | 10 | 1 |
| ENEMY B | 15 | 5 | 15 | 15 |
| ENEMY C | 10 | 5 | 15 | 5 |
| FRIEND A | — | 1 | 0 | 15 |
| FRIEND B | — | 0 | 0 | 15 |
| SELF J | — | 0 | 0 | 15 |

*FIG. 8*

| COMMAND (SKILL) / CHARACTER | PHYSICAL ATTACK | FIRE | BLIZZARD | KEARU |
|---|---|---|---|---|
| ENEMY A | 15 (0-14) | 15 (15-29) | 10 (30-39) | 1 (40) |
| ENEMY B | 15 (41-55) | 5 (56-60) | 15 (61-75) | 15 (76-90) |
| ENEMY C | 10 (91-100) | 5 (101-105) | 15 (106-120) | 5 (121-125) |
| FRIEND A | — | 1 (126) | 0 | 15 (127-141) |
| FRIEND B | — | 0 | 0 | 15 (142-156) |
| SELF J | — | 0 | 0 | 15 (157-171) |

# FIG. 9

71

| COMMAND (SKILL) / CHARACTER | PHYSICAL ATTACK | FIRE | BLIZZARD | KEARU | PARALYSIS | STATUS 1 | STATUS 2 |
|---|---|---|---|---|---|---|---|
| ENEMY A | 15 | 15 | 10 | 0 | 15 | — | — |
| ENEMY B | 15 | 5 | 15 | 15 | 15 | PARALYSIS | — |
| ENEMY C | 10 | 5 | 15 | 5 | 15 | — | — |
| ENEMY D | 15 | 5 | 10 | 8 | 15 | — | — |
| ENEMY E | 15 | 8 | 7 | 5 | 15 | — | — |
| ⋮ | ⋮ | ⋮ | ⋮ | ⋮ | ⋮ | ⋮ | ⋮ |
| FRIEND A | — | 0 | 0 | 15 | 0 | — | — |
| FRIEND B | — | 0 | 0 | 15 | 0 | — | — |
| ⋮ | ⋮ | ⋮ | ⋮ | ⋮ | ⋮ | ⋮ | ⋮ |
| SELF J | — | 0 | 0 | 15 | 0 | — | — |
| ⋮ | ⋮ | ⋮ | ⋮ | ⋮ | ⋮ | ⋮ | ⋮ |

FIG. 10

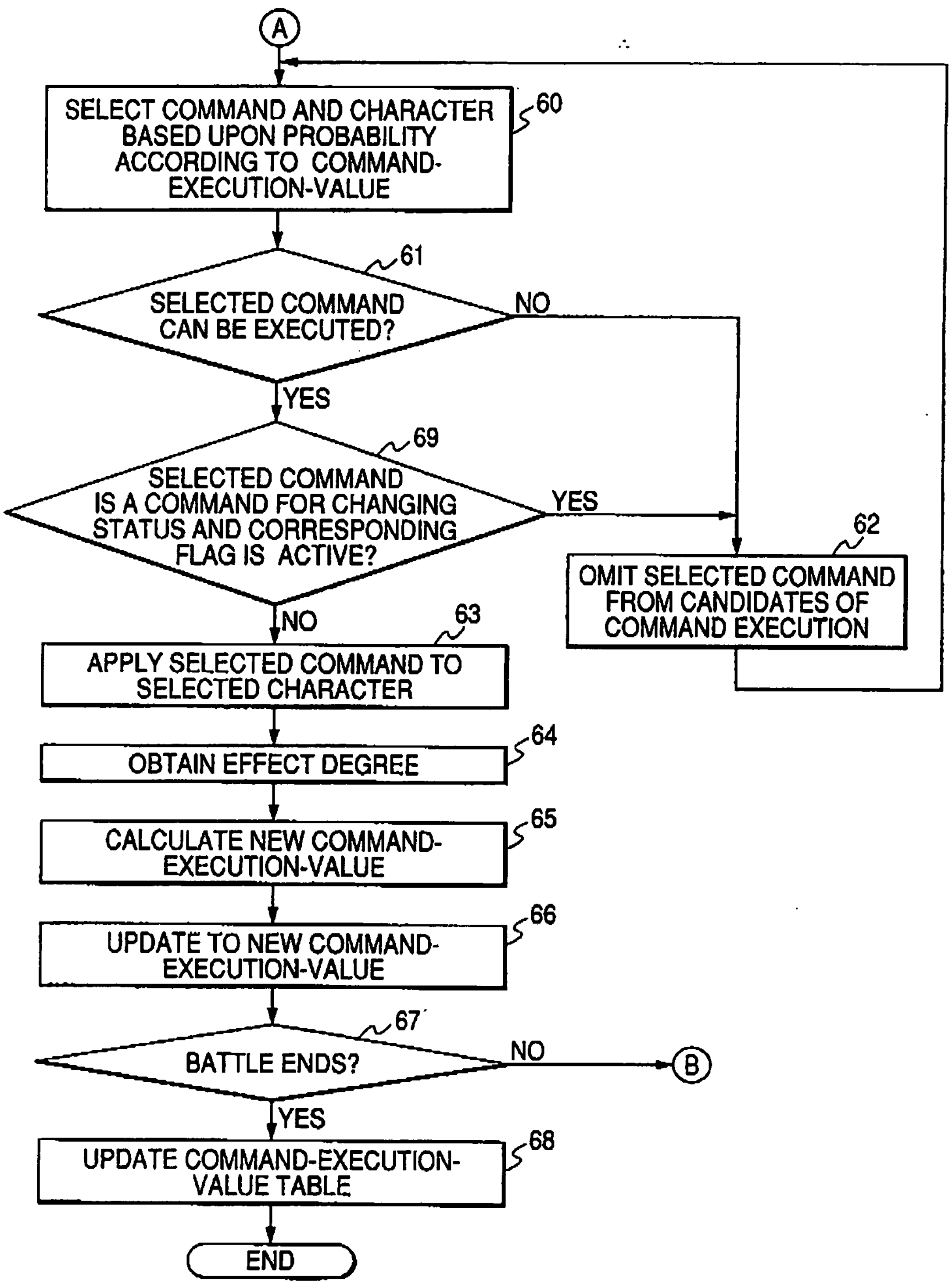
A
SELECT COMMAND AND CHARACTER BASED UPON PROBABILITY ACCORDING TO COMMAND-EXECUTION-VALUE
60
SELECTED COMMAND CAN BE EXECUTED?
61
NO
YES
SELECTED COMMAND IS A COMMAND FOR CHANGING STATUS AND CORRESPONDING FLAG IS ACTIVE?
69
YES
62
OMIT SELECTED COMMAND FROM CANDIDATES OF COMMAND EXECUTION
NO
63
APPLY SELECTED COMMAND TO SELECTED CHARACTER
OBTAIN EFFECT DEGREE
64
CALCULATE NEW COMMAND-EXECUTION-VALUE
65
UPDATE TO NEW COMMAND-EXECUTION-VALUE
66
67
BATTLE ENDS?
NO
B
YES
UPDATE COMMAND-EXECUTION-VALUE TABLE
68
END